# EUROPÄISCHE PATENTSCHRIFT

(11) **EP 0 521 316 B1**
(45) Veröffentlichungstag und Bekanntmachung des Hinweises auf die Patenterteilung: **19.04.1995**
(21) Anmeldenummer: 92109649.1
(22) Anmeldetag: 09.06.1992
(51) Int. Cl.: B23Q 7/14

(54) **Vorrichtung zum automatischen Palettenwechsel**
Device for automatic pallet changer
Dispositif pour le changement automatique des palettes

(30) Priorität: 04.07.1991 DE 4122215
(43) Veröffentlichungstag der Anmeldung: 07.01.1993
(73) Patentinhaber: DECKEL MAHO GmbH, D-87459 Pfronten (DE)
(72) Erfinder: Hofmann, Dietmar, O-5912 Seebach/Thüringen (DE)
(74) Vertreter: Beetz & Partner Patentanwälte

(56) Entgegenhaltungen:
- EP-A- 0 088 921
- EP-A- 0 188 705
- EP-A- 0 228 201
- CH-A- 658 615
- DE-C- 3 923 574
- FR-A- 2 443 311
- FR-A- 2 552 366
- US-A- 5 052 735

## Beschreibung

Die Erfindung betrifft eine Vorrichtung zum automatischen Palettenwechsel, insbesondere bei Werkzeugmaschinen, mit einem Palettenträger zur lagefixierten Aufnahme einer Werkstückpalette, einem Palettenwechsler, der eine vertikal verschiebbare Tragkonstruktion und einen auf dieser verdrehbar angeordneten Palettenmitnehmer zum Anheben und Verschwenken der Werkstückpalette umfaßt, sowie einer Palettenspannvorrichtung, die eine im Palettenträger angeordnete Klemmeinrichtung zur Fixierung eines an der Werkstückpalette angeordneten Spannbolzens aufweist.

Aus der DE-PS 39 23 574 ist eine derartige Vorrichtung zum Palettenwechsel bekannt, bei der ein Palettenwechsler eine motorisch heb- und senkbare Tragkonstruktion mit einem darauf verdrehbar angeordneten Palettenmitnehmer zum Austausch einer auf einem Maschinentisch angeordneten Palette gegen eine in Bereitstellungsposition befindliche Palette enthält. Die Fixierung der Palette auf dem Maschinentisch erfolgt über mehrere an der Palette angeordnete Spann- und Justierbolzen, die von einer hydraulisch betätigten Spanneinheit im Maschinentisch festgeklemmt werden. Ein Nachteil dieser Vorrichtung besteht darin, daß für die Betätigung der Palettenspannvorrichtung ein gesonderter Hydraulikantrieb benötigt wird. Die Ansteuerung des Palettenwechslerantriebs und des Hydraulikantriebs der Spannvorrichtung erfolgt separat und muß in geeigneter Weise aufeinander abgestimmt werden. Für die Betätigung und Anpassung der beiden gesonderten Antriebe ist daher ein entsprechend komplexes Steuerungssystem erforderlich.

Die Aufgabe der Erfindung besteht darin, eine Vorrichtung zum automatischen Palettenwechsel zu schaffen, die ohne steuerungstechnischen Aufwand eine automatische und positionsgenaue Fixierung der Werkstückpalette auf dem Palettenträger gewährleistet.

Diese Aufgabe wird dadurch gelöst, daß die Klemmeinrichtung zwei über Druckfedern gegeneinander vorgespannte Klemmschieber umfaßt, an deren einander zugewandten Stirnseiten Keile angeordnet sind, daß im Spannbolzen seitliche Keilnuten ausgebildet sind, in welche die Keile der Klemmschieber verriegelnd eingreifen, daß zumindest einer der Klemmschieber eine seitliche Aussparung hat, in die ein Stellelement eingreift, und daß im Palettenträger zumindest eine Welle gelagert ist, die an ihrem einen Ende das Stellelement trägt und an ihrem anderen Ende über ein Betätigungsglied mit dem vertikal bewegbaren Träger des Palettenwechslers kuppelbar ist.

Die erfindungsgemäße Palettenwechselvorrichtung hat den Vorteil, daß die Vertikalbewegung des Palettenwechslers über mechanische Betätigungs - und Stellelemente in eine Horizontalverschiebung eines Klemmschiebers im Palettenträger zum Lösen bzw. Verriegeln der Palettenspannvorrichtung umgewandelt wird. Für die Aktivierung der Palettenspannvorrichtung ist somit weder ein gesonderter Antrieb noch eine separate Steuerung erforderlich. Durch die mechanische Kupplung zwischen der Palettenspannvorrichtung und der vertikal bewegbaren Tragkonstruktion des Palettenwechslers ist sichergestellt, daß die Palettenspannvorrichtung vor dem Anheben der Werkstückpalette selbsttätig gelöst und nach dem Absenken auf den Palettenträger wieder verriegelt wird. Die Keile an den Stirnseiten der Klemmschieber werden über die Druckfedern in die seitlichen Keilnuten des Spannbolzens gedrückt, wodurch die Werkstückpalette unter Zugspannung auf dem Palettenträger fixiert wird. Diese selbsthemmende Keilverbindung verhindert ein selbständiges Lösen der Spannvorrichtung und eine Verschiebung der Palette auch unter der Krafteinwirkung während der Bearbeitung.

Bei einer besonders zweckmäßigen Ausgestaltung des Erfindungsgegenstandes ist das in die Aussparung am Klemmschieber eingreifende Stellelement durch eine in der Stirnseite der Welle eingearbeitete Nut und eine zur Wellenachse exzentrisch versetzte Laufrolle gebildet, die mit dem Klemmschieber verschiebbar angeordnet ist. Die Laufrolle führt anstatt Gleitbewegung bei herkömmlichen Nocken eine Abrollbewegung aus, wodurch der Reibungsverschleiß verringert und damit die Lebensdauer und Zuverlässigkeit der Vorrichtung erhöht wird.

Das Betätigungsglied zum Verdrehen der das Stellelement tragenden Welle weist in vorteilhafter Weise einen am freien Ende der Welle montierten Stellhebel auf, der beim Anheben des Trägers entlang der zunächst schräg nach innen verlaufenden Seitenflächen geführt wird. Dadurch kann die Vertikalbewegung des Trägers mit einfachen mechanischen Mitteln in eine Horizontalbewegung der Klemmschieber umgewandelt werden.

In einer weiteren zweckmäßigen Ausgestaltung ist an der in Eingriff mit dem Kupplungselement gelangenden Außenseite des Stellhebels eine drehbare Führungsrolle angeordnet. Dadurch wird die Reibung bzw. der Verschleiß zwischen dem Stellhebel und dem Kupplungselement verringert.

Die Druckfedern zur Vorspannung der Klemmschieber sind zweckmäßigerweise Tellerfedern, durch die eine für die Klemmung erforderliche hohe Spannkraft bei relativ geringem Platzbedarf erzeugt werden kann.

Gemäß einer besonders zweckmäßigen Ausführung der Erfindung ist jedem Klemmschieber eine gesonderte Welle mit jeweils einem Stellelement zugeordnet. Dadurch können beide Klemmschieber gleichmäßig verstellt werden, wodurch eine positionsgenaue zentrische Einspannung erreicht werden kann.

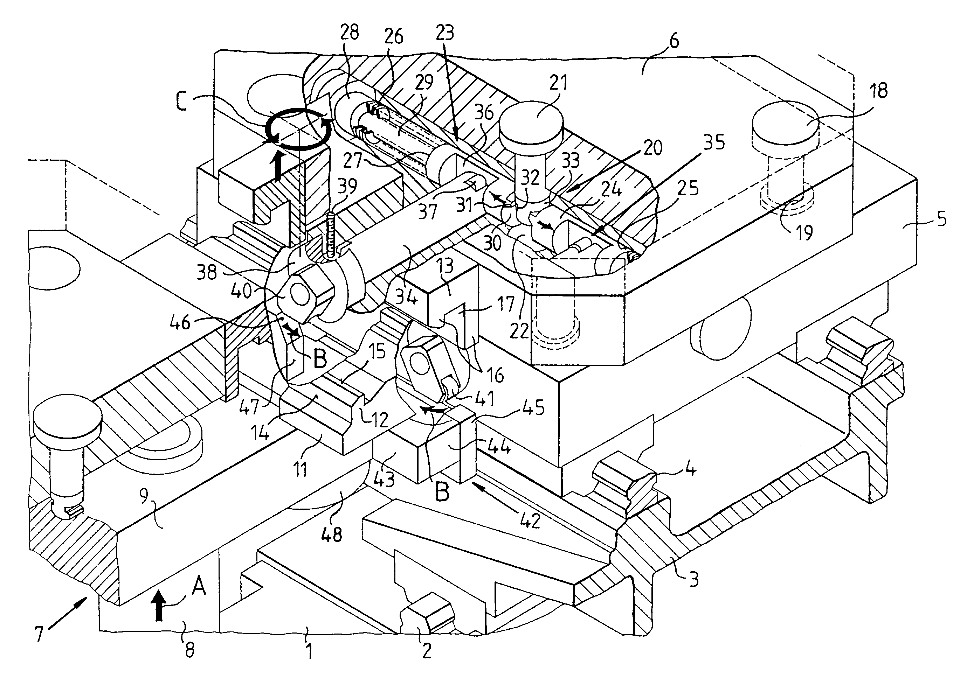

Weitere Besonderheiten und Vorzüge der Erfindung ergeben sich aus der folgenden Beschreibung eines bevorzugten Ausführungsbeispiels anhand der Zeichnung.

Die perspektivische Ansicht zeigt ein Maschinengestell 1 einer Werkzeugmaschine mit einer Horizontalführung 2, auf der ein Schlitten 3 längsverschiebbar angeordnet ist. Auf der Oberseite des Schlittens 3 sind quer zur Horizontalführung 2 verlaufende Führungsleisten 4 vorgesehen, auf denen ein Palettenträger 5 zur Aufnahme einer Werkstückpalette 6 verschiebbar geführt ist. Die horizontalen Verfahrbewegungen des Schlittens 3 und des Palettenträgers 5 erfolgen durch - nicht dargestellte - Antriebsmotoren.

An der Vorderseite des Maschinengestells 1 ist ein Palettenwechsler 7 angeordnet, der zum automatischen Wechsel der auf dem Palettenträger 5 aufgenommenen Werkstückpalette 6 gegen eine in Standby-Position befindliche Palette ausgebildet ist.

Der Palettenwechsler 7 umfaßt eine motorisch heb- und absenkbare Tragsäule 8, an deren oberem Ende eine Tragkonstruktion 9 befestigt ist. Auf der Tragkonstruktion 9 ist ein mittels eines Antriebs um die vertikale Hochachse verdrehbarer Mitnehmer 11 angeordnet. Bei dem dargestellten Ausführungsbeispiel ist der Mitnehmer 11 auf einer im Träger 9 drehbar gelagerten Antriebswelle montiert, deren Drehung um 180° über einen Antriebsmechanismus, z.B. einen Hydraulikmotor 48 erfolgt.

Der teilweise geschnitten dargestellte Mitnehmer 11 weist nach oben ausgerichtete diametral gegenüberliegende Tragelemente 12 auf, die beim Palettenwechsel in Eingriff mit einem seitlich an der Werkstückpalette 6 angeordneten Tragprofil 13 gelangen. Die Tragelemente 12 sind in Form von leistenförmigen Ansätzen mit seitlichen Anlageflächen 14 und einer teilweise abgeschrägten oberen Planfläche 15 ausgebildet.

Die an den vertikalen Stirnseiten der Werkstückpaletten 6 angeordneten leistenförmigen Tragprofile 13 haben einen U-förmigen Querschnitt mit zwei nach unten ragenden Tragschenkeln 16, zwischen denen eine Nut 17 gebildet wird. Die Breite der Nut 17 ist an den Abstand der seitlichen Führungsflächen 14 der Tragelemente 12 am Mitnehmer 11 angepaßt, so daß die vertikalen Innenflächen der Nut 17 während des Palettenwechsels zur Anlage mit den seitlichen Anlageflächen 14 der Tragelemente 12 gelangen.

Durch die Ausgestaltung des Mitnehmers 11 am Palettenwechsler 7 und der an den Werkstückpaletten 6 seitlich angeordneten Tragprofile 13 können sowohl die in Standby-Position befindliche Palette als auch die auf dem Palettenträger 5 angeordnete Palette gleichzeitig freitragend angehoben und anschließend verschwenkt werden. Da von der oberen Planfläche 15 und den seitlichen Anlageflächen 14 der Tragelemente 12 sämtliche von den Werkstückpaletten 6 auf den Mitnehmer 11 wirkenden Stützkräfte und Momente aufgenommen werden, sind keine zusätzlichen Trag- und Führungselemente erforderlich, auf denen die Paletten entlang ihrer Wechselbahn geführt und entsprechend abgestützt werden müßten.

In den Eckenbereichen der Werkstückpalette 6 sind vertikal nach unten vorstehende Zentrierbolzen 18 montiert, die zur genauen Positionierung der Werkstückpalette 6 auf dem Palettenträger 5 in entsprechende an der horizontalen Oberseite des Palettenwechslers 5 angeordnete Aufnahmebohrungen 19 eingreifen.

Zur Fixierung der Werkstückpalette 6 auf dem Palettenträger 5 ist eine Palettenspannvorrichtung 20 vorgesehen, bei der ein in der Mitte der Werkstückpalette 6 angeordneter vertikal nach unten vorstehender Spannbolzen 21 in eine mittige Vertikalbohrung 22 im Palettenträger 5 eingeführt und dort von einer im folgenden näher erläuterten Klemmeinrichtung 23 festgespannt wird. Die Klemmeinrichtung 23 umfaßt zwei zylindrische Klemmschieber 24, die in einer quer zur Vertikalbohrung 22 verlaufenden Durchgangsbohrung 25 verschiebbar geführt sind. Die im Bereich der Vertikalbohrung 22 einander gegenüberliegenden Klemmschieber 24 werden über Druckfedern 26 gegeneinander vorgespannt. Jedem Klemmschieber 24 ist eine Druckfeder 26 zugeordnet, die jeweils zwischen der äußeren Stirnseite 27 des Klemmschiebers 24 und einem am jeweiligen äußeren Ende der Durchgangsbohrung 25 im Palettenträger 5 montierten Abschlußteil 28 angeordnet ist. Die Druckfeder 26 besteht aus mehreren aufeinanderfolgenden Tellerfedern, die auf einem im Abschlußteil 28 verschiebbar geführten zylindrischen Ansatz 29 des Klemmschiebers 24 aufgenommen sind. Die Vorspannung des Klemmschiebers 24 kann auf einfache Weise durch geeignete Auswahl und Anordnung der Tellerfedern sowie durch eine verstellbare Anordnung des Abschlußteils 28 im Palettenträger 5 eingestellt werden. An den einander gegenüberliegenden inneren Stirnseiten 30 der Klemmschieber 24 ist jeweils ein Keil 31 vorgesehen. In der Klemmstellung greifen die beiden Keile 31 der über die Druckfedern 26 nach innen verschobenen Klemmschieber 24 in diametral gegenüberliegende Keilnuten 32 am Spannbolzen 21 ein. Die Keilnuten 32 sind an einem zwischen die beiden Klemmschieber 24 hineinragenden Klemmansatz 33 am unteren Ende des Spannbolzens 21 ausgebildet.

Im Palettenträger 5 sind zwei zueinander parallele Wellen 34 drehbar angeordnet, die rechtwinklig zur Längsachse der Klemmschieber 24 verlaufen und an ihrem inneren Ende jeweils ein Stellelement 35 tragen. Die beiden Klemmschieber 24 haben jeweils eine seitliche Aussparung 36, in die ein entsprechend zugehöriges Stellelement 35 zur Betätigung des Klemmschiebers 24 eingreift. Das Stellelement 35 wird durch eine stirnseitig in die Welle 34 gearbeitete Nut gebildet, die über eine auf dem Klemmschieber 24 montierte Laufrolle 37 greift. Die höhenversetzte Anordnung von Klemmschieber 24 und Welle 34 bewirkt die Umwandlung der Drehbewegung der Welle 34 in eine Axialbewegung des Klemmschiebers 24.

Ein im Palettenträger 5 befindlicher Gewindestift 39 bewirkt zusammen mit einem auf der Welle 34 tangential angeordneten Anschlag die Begrenzung der Drehbewegung der Welle 34 und damit des Hubes des Klemmschiebers 24 im Falle des Nichtvorhandenseins einer Palette 6.

Das Stellelement 35 kann auch durch eine in der Welle 34 drehbar gelagerte und zur Wellenachse exzentrisch versetzte Laufrolle gebildet sein, deren Mantelfläche seitlich über die Außenfläche der Welle 34 vorsteht. Über zwei Lagerbuchsen 38 in der dem Palettenwechsler 7 zugewandten Stirnseite des Palettenträgers 5 sind die Wellen 34 drehbar gelagert und gegen Axialverschiebung gesichert. An den aus den Lagerbuchsen 38 vorstehenden vorderen Enden der Wellen 34 ist jeweils ein Stellhebel 40 drehfest montiert. Die Stellhebel 40 sind so auf den Wellenenden fixiert, daß sie gegenüber der vertikal nach unten ausgerichteten Stellung nach auswärts verschwenkt sind, wenn sich die Klemmschieber 24 in der Einrückstellung am Spannbolzen 21 befinden. Im Bereich der unteren Außenkante d Stellhebels 40 ist eine drehbare Führungsrolle 41 angeordnet deren Mantelfläche über die Außenkante des Stellhebels 40 seitlich vorsteht.

An der dem Palettenträger 5 zugewandten Stirnseite des Trägers 9 ist unterhalb des Mitnehmers 11 ein Kupplungselement 42 angeordnet, in das die an den Wellen 34 angeordneten Stellhebel 40 eingreifen. Das Kupplungselement 42 enthält einen am Träger 9 befestigten C-förmigen Rahmen 43 mit zwei in Richtung zum Palettenträger 5 weisenden Schenkeln 44. An der dem Palettenträger 5 zugewandten Stirnseite der Schenkel 44 sind Führungsansätze 45 vorgesehen. Die Führungsansätze 45 haben eine von oben nach unten zunächst schräg nach innen verlaufende erste Seitenfläche 46, an die sich eine senkrechte zweite Seitenfläche 47 anschließt. Beim Anheben des Trägers 9 am Palettenwechsler 5 rollen die seitlichen Führungsrollen 41 der Stellhebel 40 auf den Seitenflächen ab, wodurch die Stellhebel 40 zur Lösung der Klemmeinrichtung nach innen verschwenkt werden.

Die vorstehend beschriebene Palettenwechselvorrichtung arbeitet wie folgt:
Bei einem Palettenwechsel muß der Palettenträger 5 zunächst über den Schlitten 3 entlang der Führungsleisten 4 in eine vorbestimmte Wechselposition verfahren, bei der die an der Werkstückpalette 6 angeordneten Tragprofile 13 mit den Tragelementen 12 des Mitnehmers 11 fluchten. Anschließend wird die Tragsäule 8 mit dem Träger 9 durch einen geeigneten Antrieb, z. B. einen Hydraulikzylinder, in Pfeilrichtung A angehoben. Durch die Hubbewegung des Trägers 9 am Palettenwechsler 7 gelangen zunächst die seitlichen Führungsrollen 41 an den Stellhebeln 40 zur Anlage mit den Oberkanten der schrägen Seitenflächen 46 an den Führungsansätzen 45. Mit fortschreitender Hubbewegung des Trägers 9 werden die in der Verriegelungsstellung nach außen verschwenkten Stellhebel 40 durch Anlage an den schräg nach innen verlaufenden Seitenflächen 46 in Pfeilrichtung B bis in die vertikale Lage verschwenkt. Dabei führen die seitlichen Führungsrollen 41 der Stellhebel 40 eine Abrollbewegung auf den schrägen Seitenflächen 46 der Führungsansätze 45 durch. Die Verdrehung der Stellhebel 40 wird über die Wellen 34 auf die Stellelemente 35 übertragen, wobei die Laufrollen 37 durch die Stellnocken 35 nach außen bewegt werden. Dadurch werden die Klemmschieber 24 entgegen der Druckfeder 26 aus ihrer Verriegelungsstellung am Spannbolzen 21 nach außen in eine Lösestellung bewegt. Dabei gelangen die Keile 31 an den inneren Stirnseiten 30 der Klemmschieber 24 außer Eingriff mit den Keilnuten 32 am Spannbolzen 21, so daß dieser vollständig freigegeben wird. Beim weiteren Anheben des Trägers 9 werden die Stellhebel 40 über die senkrechten Seitenflächen 47 an den Führungsansätzen 45 in dieser Lösestellung gehalten, bis schließlich das Tragelement 12 am Mitnehmer 11 vollständig in das Tragprofil 13 an der Werkstückpalette 6 eingreift und die Werkstückpalette 6 angehoben wird. Der Abstand zwischen dem Mitnehmer 11 und dem Kupplungselement 42 ist so gewählt, daß die Klemmeinrichtung bereits vollständig gelöst ist, bevor die Palette angehoben wird. Die Hubbewegung des Trägers 9 wird beendet, wenn die Zentrierbolzen 18 vollständig aus den Aufnahmebohrungen 19 ausgehoben sind und die über dem Palettenträger befindliche Palette zusammen mit der in Standby-Position befindlichen Palette freitragend an dem Mitnehmer 11 hängen. Daraufhin wird der Mitnehmer 11 in Pfeilrichtung C um 180° verschwenkt, wobei ein Positionswechsel der beiden Paletten erfolgt. Anschließend wird der Träger 9 abgesenkt. Bei dieser Verschiebebewegung gelangen zunächst die Zentrierbolzen 18 in Eingriff mit den Aufnahmebohrungen 19, wodurch eine genaue Positionierung der Werkstückpalette 6 erreicht wird. Wenn die Werkstückpalette 6 vollständig auf dem Palettenträger 5 aufliegt, gelangen zunächst die Tragelemente 12 des Mitnehmers 11 außer Eingriff mit dem Tragprofil 13 an der Werkstückpalette 6. Beim weiteren Absenken des Trägers 9 rollen die über die Druckfedern 26 an die Seitenflächen der Führungsansätze 45 angepreßten Führungsrollen zunächst auf den senkrechten Seitenflächen 47 und anschließend auf den schrägen Seitenflächen 46 ab. Dadurch werden die Stellhebel 40 nach außen verschwenkt, wobei die Klemmschieber 24 von den Druckfedern 26 aus der Lösestellung in die Verriegelungsstellung verschoben werden. Dabei greifen die Keile 31 an den Stirnseiten der Klemmschieber 24 in die seitlichen Keilnuten 32 des Spannbolzens 21 ein. Nach erfolgtem Palettenwechsel ist somit die vertauschte Werkstückpalette 6 auf dem Palettenträger 5 erneut fest eingespannt und kann über den Schlitten 3 in eine entsprechende Bearbeitungsposition verfahren werden.

Die Erfindung ist nicht auf das dargestellte Ausführungsbeispiel beschränkt. So kann die bei der gezeigten Ausführung in Standby-Position freitragend gehaltene Palette beispielsweise auch auf einen weiteren Palettenträger, einen Palettenbahnhof oder ein Palettenfördersystem abgesenkt werden, wo sie dann von einer entsprechend der Erfindung ausgebildeten Spannvorrichtung fixiert wird. Darüber hinaus kann auch die mechanische Kupplungsverbindung zwischen dem vertikal verschiebbaren Träger und der Welle zur Betätigung der Klemmeinrichtung durch andere kuppelbare Übertragungsmechanismen z. B. einen kuppelbaren Zahnstangenantrieb, einen Exzenter od. dgl., erfolgen, bei denen eine Linearbewegung in eine Drehbewegung umgewandelt wird.

## Patentansprüche

1. Vorrichtung zum automatischen Palettenwechsel bei Werkzeugmaschinen, mit
einem Palettenträger (5) zur lagefixierten Aufnahme einer Werkstückpalette (6),
einem Palettenwechsler (7), der eine vertikal verschiebbare Tragkonstruktion (9) und einen auf dieser verdrehbar angeordneten Mitnehmer (11) zum Anheben und Verschwenken der Werkstückpalette (6) aufweist, und
einer Palettenspannvorrichtung (20), die eine im Palettenträger (5) angeordnete Klemmeinrichtung (23) zur Fixierung eines an der Werkstückpalette (6) angeordneten Spannbolzens (21) aufweist,
**dadurch gekennzeichnet,**
daß die Klemmeinrichtung (23) zwei über Druckfedern (26) gegeneinander vorgespannte Klemmschieber (24) umfaßt, an deren einander zugewandten Stirnseiten (30) Keile (31) angeordnet sind,
daß im Spannbolzen (21) seitliche Keilnuten (32) ausgebildet sind, in welche die Keile (31) der Klemmschieber (24) verriegelnd eingreifen,
daß zumindest einer der Klemmschieber (24) eine seitliche Aussparung (36) hat, in die ein Stellelement (35) eingreift, und
daß im Palettenträger (5) zumindest eine Welle (34) gelagert ist, die an ihrem einen Ende das Stellelement (35) trägt und an ihrem anderen Ende über ein Betätigungsglied (40) mit der vertikal bewegbaren Tragkonstruktion (9) des Palettenwechslers (7) kuppelbar ist.

2. Vorrichtung nach Anspruch 1,
dadurch gekennzeichnet,
daß das Stellelement (35) eine in die Stirnseite der Welle (34) eingearbeitete Nut und eine zur Wellenachse exzentrisch versetzte Laufrolle (37) umfaßt, die mit dem Klemmschieber (24) verschiebbar angeordnet ist.

3. Vorrichtung nach Anspruch 1 oder 2,
dadurch gekennzeichnet,
daß das Betätigungsglied ein am freien Ende der Welle (34) drehfest montierter Stellhebel (40) ist, der beim Anheben der Tragkonstruktion (9) in ein Kupplungselement (42) an der Stirnseite der Tragkonstruktion (9) eingreift.

4. Vorrichtung nach Anspruch 3,
dadurch gekennzeichnet,
daß das Kupplungselement (42) einen Rahmen (43) mit zumindest einen in Richtung zum Palettenträger (5) weisenden Schenkel (44) aufweist, an dem ein Führungsansatz (45) angeordnet ist.

5. Vorrichtung nach Anspruch 4,
dadurch gekennzeichnet,
daß der Führungsansatz (45) eine von oben nach unten zunächst schräg nach innen verlaufende erste Seitenfläche (46) und eine an diese sich anschließende senkrechte zweite Seitenfläche (47) aufweist.

6. Vorrichtung nach einem der Ansprüche 3 bis 5,
dadurch gekennzeichnet,
daß an der Außenseite des Stellhebels (40) eine drehbare Führungsrolle (41) angeordnet ist, die zur Anlage mit dem Kupplungselement (42) gelangt.

7. Vorrichtung nach einem der vorhergehenden Ansprüche,
dadurch gekennzeichnet,
daß die Druckfedern (26) zur Vorspannung der Klemmschieber (24) mehrere aufeinanderfolgende Tellerfedern sind, die zwischen der äußeren Stirnseite (27) der Klemmschieber (24) und einem im Palettenträger (5) montierten Abschlußteil (28) angeordnet sind.

8. Vorrichtung nach einem der vorhergehenden Ansprüche,
dadurch gekennzeichnet,
daß jeder der Klemmschieber (24) eine seitliche Aussparung (36) aufweist und daß im Palettenträger (5) zwei zueinander parallele Wellen (34) angeordnet sind, die über jeweils einen Stellhebel (40) mit dem Träger (9) kuppelbar sind.

## Claims

1. A mechanism for automatic pallet changing in machine tools, comprising
a pallet carrier (5) for positionally fixed reception of a workpiece pallet (6),
a pallet changer (7) comprising a vertically displaceable carrying structure (9) and a driver (11) rotatable thereon for lifting and pivoting the workpiece pallet (6), and
a pallet clamping mechanism (20) comprising a clamping means (23) disposed in the pallet carrier (5) for fixing a clamp bolt (21) disposed on the workpiece pallet (6),
characterised in that
the clamping means (23) comprises two sliding clamps (24) prestressed relatively to one another by compression springs (26), keys (30) being disposed at their facing end faces (30),
in that the clamp bolt (21) is formed with lateral splines (32) in which the keys (31) of the sliding clamps (24) lockingly engage,
in that at least one of the sliding clamps (24) has a lateral recess (36) in which an adjusting element (35) engages, and
in that at least one shaft 34) is mounted in the pallet carrier (5) and carries the adjusting element (35) at one end and can be connected at its other end, via an actuating member (40), to the vertically movable carrier structure (9) of the pallet changer (7).

2. A mechanism according to claim 1, characterised in that the adjusting element (35) comprises a groove formed in the end face of the shaft (34) and a roller (37) eccentrically offset from the shaft axis and displaceable with the sliding clamp (24).

3. A mechanism according to claim 1 or 2, characterised in that the actuating member is an adjusting lever (40) mounted so as to be relatively non-rotatable at the free end of the shaft (34) and, on the lifting of the support structure (9), engages in a coupling element (42) at the end face of the carrier structure (9).

4. A mechanism according to claim 3, characterised in that the coupling element (42) comprises a frame (43) with at least one arm (44) pointing in the direction of the pallet carrier (5) and having a guide projection (45) thereon.

5. A mechanism according to claim 4, characterised in that the guide projection (45) comprises a first side surface (46) which from top to bottom initially extends obliquely inwards, and a vertical second side surface (47) adjoining the first side surface.

6. A mechanism according to any one of claims 3 to 5, characterised in that a rotatable guide roller (41) is disposed on the outside of the adjusting lever (40) and comes into abutment with the coupling element (42).

7. A mechanism according to any one of the preceding claims, characterised in that the compression springs (26) for prestressing the sliding clamps (24) are a plurality of successive cup springs disposed between the outer end face (27) of the sliding clamps (24) and an end part (28) mounted in the pallet carrier (5).

8. A mechanism according to any one of the preceding claims, characterised in that each of the sliding clamps (24) has a lateral recess (36) and in that two parallel shafts (34) are disposed in the pallet carrier (5) and can each be coupled to the carrier via an adjusting lever (40).

## Revendications

1. Dispositif de changement automatique de palettes, pour machines-outils comprenant
un porte-palette (5) destiné à recevoir une palette porte-pièce (6) immobilisée en position,
un changeur de palettes (7) qui comprend une construction porteuse (9) mobile en translation dans la direction verticale et un entraîneur (11) monté rotatif sur cette construction et destiné à élever et faire pivoter la palette porte-pièce (6), et
un dispositif (20) de serrage de palette qui présente un dispositif de blocage (23) agencé dans le porte-palette (5) pour immobiliser une tige de serrage (21) agencée sur la palette porte-pièce (6),
caractérisé
en ce que le dispositif de blocage (23) comprend deux coulisseaux de blocage (24) précontraints l'un par rapport à l'autre au moyen de ressorts de compression (26) et qui portent des clavettes (31) sur leurs surfaces frontales (30) qui se font mutuellement face,
en ce que, dans la tige de serrage (21), sont formées des rainures de clavettes latérales (32) dans lesquelles les clavettes (31) des coulisseaux de blocage (24) s'engagent pour assurer un verrouillage,
en ce qu'au moins un des coulisseaux de blocage (24) présente un évidement latéral (36) dans lequel s'engage un élément de commande (35), et
en ce que, dans le porte-palette (5), tourillonne au moins un arbre (34) qui porte l'élément de commande (35) à une de ses extrémités et qui, à son autre extrémité, peut être accouplé par l'intermédiaire d'un organe d'actionnement (40) à la construction porteuse (9) du changeur de palettes (7) qui est mobile dans la direction verticale.

2. Dispositif selon la revendication 1,
caractérisé
en ce que l'élément de commande (35) comprend une rainure pratiquée dans la face frontale de l'arbre (34) et un galet roulant (37) décalé excentriquement par rapport à l'axe de l'arbre, qui est agencé mobile en translation avec le coulisseau de blocage (24).

3. Dispositif selon la revendication 1 ou 2,
caractérisé
en ce que l'organe d'actionnement est un levier de commande (40) monté solidairement en rotation à l'extrémité libre de l'arbre (34) et qui, lors du soulèvement de la construction porteuse (9), s'engage dans un élément d'accouplement (42) prévu sur la face frontale de la construction porteuse (9).

4. Dispositif selon la revendication 3,
caractérisé
en ce que l'élément d'accouplement (42) comprend un châssis (43) possédant au moins une branche (44) qui pointe en direction du porte-palette (5), et sur laquelle est prévu un talon de guidage (45).

5. Dispositif selon la revendication 4,
caractérisé
en ce que le talon de guidage (45) présente une première surface latérale (46) s'étendant de haut en bas, tout d'abord obliquement vers l'intérieur, et une deuxième surface latérale verticale (47) qui fait suite à la première.

6. Dispositif selon une des revendications 3 à 5,
caractérisé
en ce que, sur la surface extérieure du levier de commande (40), est monté un galet de guidage rotatif (41) qui entre en contact avec l'élément d'accouplement (42).

7. Dispositif selon une des revendications précédentes,
caractérisé
en ce que les ressorts de compression (26) servant à la précontrainte des coulisseaux de blocage (24) sont constitués par plusieurs rondelles Belleville successives qui sont disposées entre la surface frontale extérieure (27) des coulisseaux de blocage (24) et un élément de fermeture (28) monté dans le porte-palette (5).

8. Dispositif selon une des revendications précédentes,
caractérisé
en ce que chacun des coulisseaux de blocage (24) présente un évidement latéral (36) et en ce que, dans le porte-palette (5) sont disposés deux arbres (34) parallèles entre eux qui peuvent être accouplés au support (9), chacun par un levier de commande (40).
